(19) **Europäisches Patentamt / European Patent Office / Office européen des brevets**

(11) **EP 2 338 943 A1**

(12) **EUROPEAN PATENT APPLICATION**

(43) Date of publication:
29.06.2011 Bulletin 2011/26

(51) Int Cl.:
*C09D 5/16* (2006.01)    *C09D 183/06* (2006.01)

(21) Application number: 09015835.3

(22) Date of filing: 22.12.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(71) Applicant: Nanocyl S.A.
5060 Sambreville (BE)

(72) Inventors:
• Dubois, Philippe
4260 Braives (BE)
• Mincheva, Rosica
4020 Liege (BE)

• Beigbeder, Alexandre
59300 Valenciennes (FR)
• Claes, Michael
4624 Romsee (BE)
• Bonduel, Daniel
7060 Horrues (BE)
• Bella, Rheda
5000 Namur (BE)

(74) Representative: pronovem
Office Van Malderen
Boulevard de la Sauvenière 85/043
4000 Liège (BE)

(54) **Composition for the preparation of an anti-biofouling coating**

(57) The present invention is related to a composition for the preparation of an anti-biofouling coating comprising:

- polysiloxane;
- a curing agent;
- carbon nanotubes;
- a metal-free catalyst consisting of an organic acid.

**Fig. 1**

**Description**

**Field of the invention**

The present invention relates to a composition for the preparation of a polysiloxane-based coating comprising carbon nanotubes.

The present invention also relates to the use of such compositions as an anti-biofouling coating, and more particularly, the use of such coatings for paintings in a marine environment.

**Prior art**

Biological contamination by a marine environment, which is known as biofouling, whether it is micro-organic or macro-organic, is a major problem, not only for land-based installations that use a large amount of sea water, but also for offshore installations and more generally for any object in permanent or prolonged contact with sea water, for instance boat hulls and aquaculture ropes, cages and nets. Indeed, marine organisms, such as algae, shellfish and other crustaceans, adhere to and then grow on the exposed surfaces, which impairs the correct functioning and deteriorates said installations or objects. In particular, they may, for example, block the inlets of sea water intake valves and thus reduce the water uptake capacity of land-based installations using sea water, or they may reduce the speed of ship hulls and increase their fuel consumption by adhering to said hulls.

Marine anti-biofouling and fouling release compositions are usually applied to surfaces in permanent contact with a marine environment to control or prevent the adhesion or growth of such marine organisms or alternatively to facilitate their removal. Such a composition generally contains one or more compounds that are toxic to the marine organisms that adhere to the submerged surfaces that need to be protected. The drawback of these toxic compounds is that they need to be released into the marine environment by the marine anti-biofouling coating or paint over a relatively long period in order to be sustainably effective. As a result, such a composition is always polluting, all the more so since it generally comprises compounds such as mercury, lead, tin or arsenic.

Some marine anti-biofouling coatings or paints comprise copper-based compounds, which have been known for a long time for their toxicity to phytoplankton and other marine organisms. The copper may be, for example, in the form of cuprous oxide, copper thiocyanate, copper acrylate, flaked copper powder or copper hydroxide and may be released into the marine environment in the form of copper ions. Unfortunately, the drawback of this solution is that it does not last long. Specifically, once the copper content of the coating has been depleted, the coating is no longer effective. Usually, the compositions have very high doses of copper in order to give the coating a longer life. However, the use of high concentrations of copper may also lead to pollution of the marine environment.

The trend in terms of environmental regulations in the coming years will be the banning of the use of marine anti-biofouling coatings such as those mentioned previously, but also those comprising tin(IV) derivatives, such as tin oxides or tributyltin, which are all environmentally toxic and hazardous, in favour of alternative coatings that are more environment-friendly.

Document WO 2008/046166 discloses an alternative to usual anti-biofouling coatings, using carbon nanotubes dispersed in a polysiloxane matrix. In the same way, a lot of catalysts for curing polysiloxane resins are known in the prior art, but the most commonly used are those based either on organotin-based or platinum-based compounds. However, due to toxicological problems and cost considerations, the use of such catalysts should be avoided in large-scale coating applications such as their application in anti-biofouling coating of boat hull and the like.

**Aims of the invention**

The present invention aims to provide a composition for the preparation of an anti-bioufouling coating that does not have the drawbacks of the prior art.

More particularly, the present invention aims to provide a composition for the preparation of an anti-bioufouling coating without any metallic catalyst.

The terms "anti-biofouling composition" are used to define a precursor composition for the preparation of a coating having anti-biofouling properties, fouling release properties or a combination thereof.

**Summary of the invention**

The present invention is related to a composition for the preparation of an anti-biofouling coating comprising:

-    polysiloxane;
-    a curing agent;

- carbon nanotubes;
- a metal-free catalyst consisting of an organic acid.

According to particular preferred embodiments, the invention further discloses at least one or a suitable combination of the following features:

- the organic acid is halogenated;
- the organic acid is fluorinated;
- the organic acid comprises trifluoroacetic acid (TFA);
- the curing agent is vinyl triisopropenoxysilane;
- the amount of catalyst is comprised between 1 and 10 percents by weight, preferably between 1 and 5 percent by weight of the total composition;
- the amount of carbon nanotubes is comprised between 0.05 and 1 percent by weight of the total composition.

A second aspect of the invention is related to a method for the protection of items in a marine environment against bio-fouling comprising the step of applying on said items a coating obtained by the mixing of the ingredients of the composition according to the above-mentioned features and embodiments.

The present invention also discloses a method for the protection of items in a marine environment against bio-fouling comprising the step of applying on said items a coating composition comprising polysiloxane, a curing agent and trifluoroacetic acid.

## Brief description of the drawings

Fig. 1 represents a coating surface comprising carbon nanotubes.

Fig. 2 represents the amount of spores (or biomass) of the marine alga Ulva that have colonized different samples described in the examples.

Fig. 3 represents the variation of the removal rate of the marine alga Ulva on different samples described in the examples.

## Detailed description of the invention

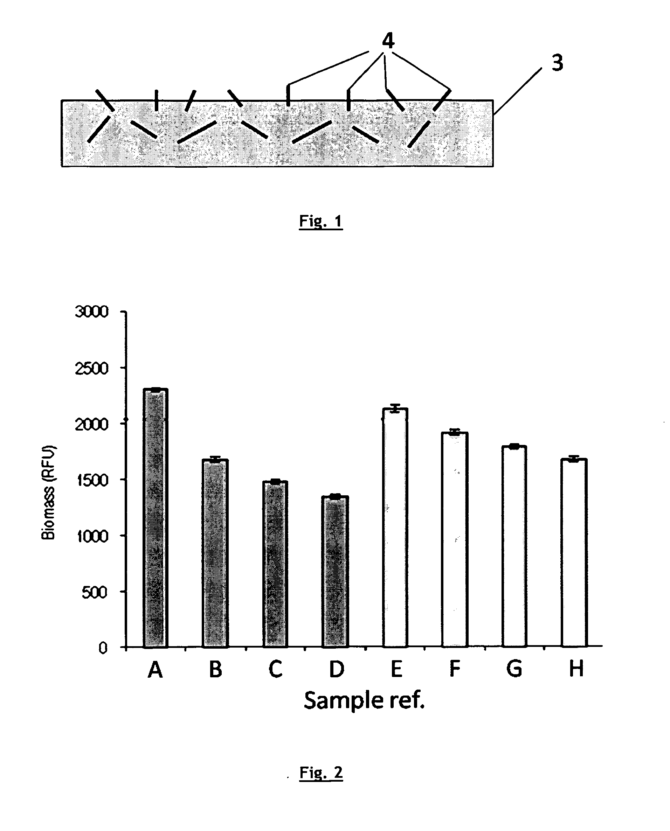

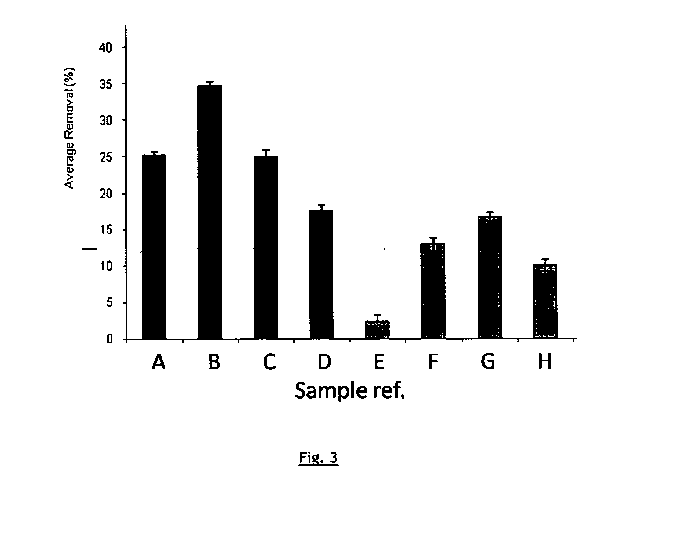

The first objective of the present invention is to avoid the use of heavy metal catalyst in polysiloxane coatings for environmental reasons. Surprisingly, it has been shown that the use of organic acid catalysts does not only solve the environmental problem of leaching metal catalyst in a marine environment, but also improves the fouling properties of multiwall carbon nanotubes (MWCNTs) comprising coatings, as shown in Fig. 2 and 3. Preferably, the organic acid catalyst is a halogenated catalyst, and more preferably a fluorinated catalyst.

Even better, even without the presence of carbon nanotubes, it can be seen in Fig. 3 that the cleaning of fouled surfaces is substantially improved by the replacement of dibutyltin dilaurate by an organic acid catalyst.

## Examples (Table 1 )

### Raw Materials used in the examples

| Materials | Description | Main characteristic features |
|---|---|---|
| polysiloxane 1 | Silanol-terminated PDMS | $\overline{M}_n$ = 20300g/mol; PDI = 1.85[a] |
| polysiloxane 2 | Silanol-terminated PDMS containing 0.5 wt.% MWCNTs | |
| VTiPOS | vinyl triisopropenoxysilane curing agent | MW = 226.36 g/mol; p = 0.926 g/cm$^3$ [b] |
| Si | Hexamethyldisilazane-treated silicone dioxide nanoparticles | Amorphous, d = 20 nm, SA = 150-200 M$^2$/g, p = 2.2 g/cm$^{3[b]}$ |
| PDMS-CH$_3$ | Trimethylsiloxy-terminated PDMS | $\overline{M}_n$ = 5970 g/mol [b] |
| DBTL | Dibutyltin dilaurate | MW=631.56g/mol, p= 1.066 g/cm$^{3[b]}$ |

(continued)

| Materials | Description | Main characteristic features |
|---|---|---|
| TFA | Trifluoroacetic acid | MW = 114.02 g/mol, p = 1.489 g/cm$^{3}$ (b) |
| DCA | Dichloro acetic acid | |
| TCA | Trichloro acetic acid | MW=163.4g/mol,p= 1.630 g/cm$^{3(b)}$ |
| PA | Phosphoric acid (85% sol.) | MW = 98 g/mol, p = 1.1.685g/cm$^{3(b)}$ |
| NA | Nitric acid (60% sol.) | MW = 63.012 g/mol, p = 1.513 3g/cm$^{3(b)}$ |
| HCl | Chloridric acid (36% sol.) | MW = 36.46 g/mol, p = 1.477 g$^{/cm\ 3(b)}$ |
| SA | Sulfuric acid | MW = 98.08 g/mol, p = 1.840 g$^{/cm3\ (b)}$ |
| (a) As determined by GPC in THF, relative to PMMA standards. (b) As claimed by the supplier. | | |

All listed materials are used as received.

For the preparation of all examples (see the following Tables) two parts (Part A and Part B) were formulated according to the commercially available two-part PDMS-based resins. In a typical experiment, part A consists of sitanot-terminated PDMS (Polysiloxane 1), hexamethyldisilazane-treated silicone dioxide (Si) and a curing agent (VTiPOS). According to the supplier's recommendations, the polysiloxane/VTiPOS ratio is fixed to 95/5 (wt%/wt%). The amount of Si is fixed to 2 wt% in the final formulations in order to regulate the viscosity.

In the case where Polysiloxane 2 was used (0.5 wt% MWCNTs) for the binary coating preparation, the MWCNTs contribution to the final mixture was adjusted to 0.1 wt% by diluting said MWCNTs with Polysiloxane 1.

For all compositions, all components were mechanically mixed at 1200 rpm for 30 min.

In all experiments, part B consists of PDMS-CH$_3$ added with the requested amount of catalyst in order to reach the final composition as marked in Tables 2 to 4.

For all sample preparations, parts A and B are mixed together in a ratio of 10:1 (wt%/wt%) in order to obtain a cross-linked PDMS via a condensation reaction at room temperature (after a 48 h reaction time, which is a predefined time selected to compare the studied formulations).

The samples were characterized in terms of viscosity (n, cP) of the binary compositions before cross-linking, tensile modulus (E, MPa) and equilibrium degree of swelling (G$_{sw}$) and the extractable value (E$_{sw}$) of the cross-linked samples (see the following Tables).

The viscosity of the compositions was determined with a Brookfield DV-II viscometer at $25 \pm 0.1$ ° C and at a rate of 1 rpm.

The tensile modulus of the samples was analysed at room temperature with a dynamic mechanical analyser DMA (TA Instrument 2980) operating in tensile strain-sweep mode. A frequency of 1 Hz, a preload of 0.1 N and an amplitude from 0.5 to 27 mm were used. The results are the average of at least three measurements.

For the swelling tests, pre-weighed dry cylindrical samples of the cross-linked formulations were immersed in 100 mL of heptane at room temperature during 48h. To determine the equilibrium degree of swelling (G$_{sw}$ %), samples were taken out at regular time intervals, the heptane remaining in excess at the sample surface was gently removed with filter paper and the swollen samples were weighed. After reaching the equilibrium, the samples were dried during 16h at 50"C under vacuum. The E$_{sw}$.the G$_{sw}$ % and the E$_{sw}$ were calculated as follows:

$$G_{sw}(\%) = \frac{(w_1 - w_0)}{w_0} \times 100$$

$$E_{sw}(\%) = \frac{(w_0 - w_2)}{w_0} \times 100$$

where w$_o$ is the weight of the sample after curing, before immersion in heptane and drying under vacuum;
where W$_1$ is the weight of the sample after immersion in heptane during 48h;
where W$_2$ is the weight of the sample after drying during 16h at 50"C under vacuum.

EP 2 338 943 A1

The values of $G_{sw}$ and $E_{sw}$ are the average of at least three samples. It can be seen in table 3 that all samples catalysed with an organic acid in the presence of carbon nanotubes were almost fully cross-linked, as they were not dissolved by hexane, and the level of extractible matter was limited to low values. Regarding inorganic acids, only samples catalysed with sulphuric acid were not fully dissolved by the hexane, but, the level of extractible (up to about 56%) showed insufficient level of cross-linking.

In the case of samples containing no carbon nanotubes (table 2), the situation is more complex, as TCA does not fully cross-link the polysiloxane at an acceptable level of catalyst.

The biofouling behavior of such coatings has been checked in an assay described below.

The assay procedure regarding the studies of cellular colonization is in accordance with section 4.2 of the Biological Workshop Manual (BWM, AMBI0 Biological evaluation workshop, University of Birmingham UK 21-22 April 2005; Ulva Sporeling Growth). Spores are released from plants collected from the seashore. The concentration of spores is adjusted to a standard concentration, for example 1 x 106 spores/ml. Each coating sample (table 4) is immersed in 30 liters of distilled water for one week, and then in artificial sea water for 1 hour in darkness, in the presence of the colonizing cells (spores of the marine alga Ulva) before the growth medium is added. The samples are then incubated in an illuminated incubator for 6 days, the medium being refreshed every 2 days. The biomass on each slide is quantified by measuring the amount of chlorophyll present. This is quantified directly through in situ fluorescence using for example a plate reader.

After 6 days of growth, the amount of cells (or biomass) that adhere to the surfaces is evaluated by in situ fluorescence determination (section 4.2.1 of the Biological Workshop Manual, AMBI0 Biological evaluation workshop, University of Birmingham, UK, 21-22 April 2005) by virtue of the auto-fluorescence of the photosynthetic pigment chlorophyll by means of a fluorescent reader which emits light of a wavelength of 430nm, exciting the chlorophyll contained within the chloroplasts of the algal cells growing on the sample surface, and then measures the 630nm light, which is emitted as the pigment returns to 'resting state'. This method of biomass quantification has the advantage of being relatively quick and nondestructive.

This procedure has been applied to coatings of the present invention. Results are summarized in Fig. 2.

The samples are then washed out and the removal rate is measured. The removal rate obtained is represented in figure 3.

Table 2: Examples of condensation-cured formulations without carbon nanotubes

| No | Additive | Catalyst | Catalyst Concentration | Result | $G_{sw}$ | $E_{SW}$ |
|---|---|---|---|---|---|---|
| 1 | Polysiloxane 1 | TFA | 1% | Cross-linked | $295,5 \pm 7,9$ | $12,7 \pm 0,2$ |
| 2 | | | 2% | Cross-linked | $398,2 \pm 3,8$ | $14,9 \pm 0,4$ |
| 3 | | | 5% | Cross-linked | $257,4 \pm 0,8$ $11,1$ | $\pm 0,5$ |
| 4 | | | 10% | Cross-linked | $256,6 \pm 1,3$ | $9,9 \pm 0,4$ |
| 5 | Polysiloxane 1 | DCA | 1% | Cross-linked | $237,0 \pm 4,5$ | $11,1 \pm 0,7$ |
| 6 | | | 2% | Cross-linked | $187,4 \pm 1,5$ | $12,6 \pm 0,7$ |
| 7 | | | 5% | Cross-linked | $189,7 \pm 3,7$ | $11,1 \pm 1,7$ |
| 8 | | | 10% | Crass-linked | $198,5 \pm, 7,1$ | $11,4 \pm 1,1$ |
| 9 | Polysiloxane 1 | TCA | 1 % | Not cross-linked | / | / |
| 10 | | | 2% | Not cross-linked | / | / |
| 11 | | | 5% | Not cross-linked | / | / |
| 12 | | | 10% | Cross-linked | $239,4 \pm 4,4$ | $12,5 \pm 2,2$ |
| 13 | Polysiloxane 1 | Phosphoric acid | 1% | Not cross-linked | / | / |
| 14 | | | 2% | Not cross-linked | / | / |
| 15 | | | 5% | Not cross-linked | / | / |
| 16 | | | 10% | Not cross-linked | / | / |

5

(continued)

| No | Additive | Catalyst | Catalyst Concentration | Result | $G_{sw}$ | $E_{SW}$ |
|---|---|---|---|---|---|---|
| 17 | Polysiloxane 1 | Nitric acid | 1% | Not cross-linked | / | / |
| 18 | | | 2% | Not cross-linked | / | / |
| 19 | | | 5% | Not cross-linked | / | / |
| 20 | | | 10% | Not cross-linked | / | / |
| 21 | Polysiloxane 1 | Chloridric acid | 1% | Not cross-linked | / | / |
| 22 | | | 2% | Not cross-linked | / | / |
| 23 | | | 5% | Not cross-linked | / | / |
| 24 | | | 10% | Not cross-linked | / | / |
| 25 | Polysiloxane 1 | Sulfuric acid | 1% | Cross-linked | $258,3 \pm 4,0$ | $34,6 \pm 2,2$ |
| 26 | | | 2% | Cross-linked | $298,7 \pm 7,0$ | $18,8 \pm 2,6$ |
| 27 | | | 5% | Cross-linked | $297,5 \pm 6,8$ | $24,0 \pm 0,2$ |
| 28 | | | 10% | Cross-linked | $415,8 \pm 10,6$ | $55,8 \pm 1,8$ |
| 29 | Polysiloxane 1 | DBTL | 0,5% | Cross-linked | $255,0 \pm 13.0$ | $11,7 \pm 0,9$ |

Table 3: Examples of condensation -cured formulations with carbon nanotubes (polysiloxane 2)

| No | Additive | Catalyst | Catalyst Concentration | Result | $G_{sw}$ (%) | $E_{sw}$ (%) |
|---|---|---|---|---|---|---|
| 30 | 0,1 % MWNT | TFA | 1% | Cross-Linked | $364,7 \pm 22, 5$ | $11,6 \pm 0,7$ |
| 31 | | | 2% | Cross-linked | $308,4 \pm 13, 5$ | $8,0 \pm 0,9$ |
| 32 | | | 5% | Cross-linked | $201,7 \pm 6,4$ | $3,7 \pm 1,9$ |
| 33 | | | 10% | Cross-linked | $205,1 \pm 21,2$ | $6,8 \pm 1,4$ |
| 34 | 0,1 % MWNT | DCA | 1% | Cross-linked | $369,8 \pm 2,4$ | $13,0 \pm 0,3$ |
| 35 | | | 2% | Cross-linked | $218,2 \pm 2,0$ | $11,4 \pm 1,0$ |
| 36 | | | 5% | Cross-linked | $215,0 \pm 7,1$ | $10,3 \pm 1,1$ |
| 37 | | | 10% | Cross-linked | $205,4 \pm 2,5$ | $10,9 \pm 0,7$ |
| 38 | 0,1% MWNT | TCA | 1% | Cross-linked | $270,4 \pm 5,3$ | $11,0 \pm 0,8$ |
| 39 | | | 2% | Cross-linked | $242,7 \pm 2,6$ | $10,9 \pm 1,5$ |
| 40 | | | 5% | Cross-linked | $247,7 \pm 8,4$ | $10,3 \pm 0,6$ |
| 41 | | | 10% | Cross-Linked | $267,8 \pm 17,5$ | $8,5 \pm + 0,3$ |
| 42 | 0,1 % MWNT | Phosphoric acid | 1% | Not cross-linked | / | / |
| 43 | | | 2% | Not cross-linked | / | / |
| 44 | | | 5% | Not cross-linked | / | / |
| 45 | | | 10% | Not cross-linked | / | / |

(continued)

| No | Additive | Catalyst | Catalyst Concentration | Result | $G_{sw}$ (%) | $E_{sw}$ (%) |
|---|---|---|---|---|---|---|
| 46 | 0,1% MWNT | Nitric acid | 1% | Not cross-Linked | / | / |
| 47 | | | 2% | Not cross-linked | / | / |
| 48 | | | 5% | Not cross-linked | / | / |
| 49 | | | 10% | Not cross-linked | / | / |
| 50 | 0,1% MWNT | Chloridric acid | 1% | Not cross-linked | / | / |
| 51 | | | 2% | Not cross-linked | / | / |
| 52 | | | 5% | Not cross-linked | / | / |
| 53 | | | 10% | Not cross-linked | / | / |
| 54 | 0,1% MWNT | Sulfuric acid | 1 % | Cross-linked | 350.0 ± 4.1 | 28,1 ± 1.6 |
| 55 | | | 2% | Cross-linked | 325.0 ± 3.1 | 26,7 ± 1.3 |
| 56 | | | 5% | Cross-linked | 370.0 ± 7.0 | 35,8 ±0.8 |
| 57 | | | 10% | Cross-linked | 369,2 9.1 | 57,5 ± 2.9 |
| 58 | 0,1% MWNT | DBTL | 0.5% | Cross-linked | 242,0 ± | 16 11,± 9± 2,0 |

Table 4: condensation-cured polysiloxane-1 formulations with and without carbon nanotubes corresponding to fig. 2 and 3, all were fully cross-linked.

| No | MWCNT concentration wt% | Catalyst | Catalyst concentration | n, CP | E, MPa | $G_{sw}$, % |
|---|---|---|---|---|---|---|
| A | 0 | TFA | 0,1 wt% | | | |
| B | 0,05 | TFA | 0.1 wt % | | 0.90±0.01 | 319 ± 11 |
| C | 0,1 | TFA | 0.5 wt% | 9470 | - | - |
| D | 0,2 | TFA | 0.5 wt% | 9470 | - | - |
| E | 0 | DBTL | 0.5 wt% | | | |
| F | 0, 05 | DBTL | 0.5 wt% | | 1.02 ± 0.05 | 1.02 ± 0.05 |
| G | 0,1 | DBTL | 0.5 wt% | 9470 | - | - |
| H | 0,2 | DBTL | 0.5 wt% | | - | - |

**Claims**

1. Composition for the preparation of an anti-biofouling coating comprising:

    - polysiloxane;
    - a curing agent;
    - carbon nanotubes;
    - a metaL-free catalyst consisting of an organic acid.

2. Composition according to claim 1, wherein the organic acid is halogenated.

3. Composition according to claim 1 or 2, wherein the organic acid is fluorinated.

4.  Composition according to any of the previous claims, wherein the organic acid comprises trifluoroacetic acid (TFA).

5.  Composition according to any of previous claims, wherein said curing agent is vinyl triisopropenoxysilane.

6.  Composition according to any of the previous claims, wherein the amount of catalyst is comprised between 1 and 5 per cent by weight of the total composition.

7.  Composition according to any of the previous claims, wherein the amount of carbon nanotubes is comprised between 0.05 and 1 per cent by weight of the total composition.

8.  Anti-biofouling coating obtained by mixing the ingredients of the composition according to any of the previous claims.

9.  Method for the protection of items in a marine environment against bio-fouling comprising the step of covering said items with the anti-biofouling coating of claim 8.

**Fig. 1**

**Fig. 2**

Fig. 3

Europäisches
Patentamt

European
Patent Office

Office européen
des brevets

**EUROPEAN SEARCH REPORT**

Application Number

EP 09 01 5835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/046166 A2 (NANOCYL S A [BE]; BEIGBEDER ALEXANDRE [FR]; BONDUEL DANIEL [BE]; CLAES) 24 April 2008 (2008-04-24)<br>* paragraphs [0001], [00 7] - [0012] *<br>* paragraphs [0030] - [0041] *<br>* paragraphs [0049], [0 54], [0 62] *<br>* claims 1, 4, 7 *<br>----- | 1-9 | INV.<br>C09D5/16<br>C09D183/06 |
| Y | US 5 663 215 A (MILLIGAN BRIAN D [GB]) 2 September 1997 (1997-09-02)<br>* column 1, lines 5-12 *<br>* column 8, line 27 - column 10, line 17 *<br>* claims 1, 19, 20, 27-30 *<br>----- | 1-9 | |

TECHNICAL FIELDS
SEARCHED (IPC)

C09D

The present search report has been drawn up for all claims

| Place of search | Date of completion of the search | Examiner |
|---|---|---|
| The Hague | 2 March 2010 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 01 5835

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2010

| Patent document cited in search report | | Publication date | Patent family member(s) | | Publication date |
|---|---|---|---|---|---|
| WO 2008046166 | A2 | 24-04-2008 | AU | 2007312883 A1 | 24-04-2008 |
| | | | CA | 2664902 A1 | 24-04-2008 |
| | | | EP | 2084235 A2 | 05-08-2009 |
| | | | KR | 20090067181 A | 24-06-2009 |
| US 5663215 | A | 02-09-1997 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008046166 A

**Non-patent literature cited in the description**

- BWM, AMBl0 Biological evaluation workshop. University of Birmingham UK, 21 April 2005
- Biological Workshop Manual, AMBl0 Biological evaluation workshop. University of Birmingham, 21 April 2005